# EUROPEAN PATENT SPECIFICATION

(11) **EP 3 970 393 B1**
(45) Date of publication and mention of the grant of the patent: **25.03.2026**
(21) Application number: 20729406.7
(22) Date of filing: 08.05.2020
(51) Int. Cl.: H04W 4/029, H04W 4/33, H04W 4/38, H04W 16/20, G06N 3/04, G06N 3/08

(54) **DEPLOYMENT METHOD AND SYSTEM FOR WIRELESS SENSING APPARATUS**
ANWENDUNGSVERFAHREN UND -SYSTEM FÜR DRAHTLOSE MESSVORRICHTUNG
PROCÉDÉ ET SYSTÈME DE DÉPLOIEMENT D'APPAREIL DE DÉTECTION SANS FIL

(30) Priority: 16.05.2019 CN 201910405853
(43) Date of publication of application: 23.03.2022
(73) Proprietor: Carrier Corporation, Palm Beach Gardens, FL 33418 (US)
(72) Inventor: HOU, Jun, Shanghai 201204 (CN); JIA, Zhen, Shanghai 201204 (CN); XI, Jie, Shanghai 201204 (CN); LIN, Junyang, Shanghai 201204 (CN); SUN, Yuanjing, Shanghai 201204 (CN); CHEN, Tianyuan, Shanghai 201204 (CN)
(74) Representative: Dehns
(86) International application number: PCT/US2020/032030
(87) International publication number: WO 2020/231782

(56) References cited:
- WO-A2-2018/080124
- US-A1- 2020 053 559
- ARNOLD MAXIMILIAN ET AL: "On Deep Learning-Based Massive MIMO Indoor User Localization", 2018 IEEE 19TH INTERNATIONAL WORKSHOP ON SIGNAL PROCESSING ADVANCES IN WIRELESS COMMUNICATIONS (SPAWC), IEEE, 25 June 2018 (2018-06-25), pages 1 - 5, XP033391907, DOI: 10.1109/SPAWC.2018.8446013

## Description

### FIELD OF THE INVENTION

The present invention relates to deployment of a wireless sensing device. More specifically, the present invention relates to a deployment method for a wireless sensing device, which aims to improve the deployment efficiency of the wireless sensing device through transfer learning. The present invention also relates to a deployment system for a wireless sensing device including at least one transmitter and at least one receiver.

### BACKGROUND OF THE INVENTION

With the continuous improvement of smart building construction and operation technologies, more and more smart building systems need to sense the presence of persons in the building and the types of the persons' activities in real time. A typical wireless sensing device detects the presence of a person in a certain region-of-interest (ROI) through fluctuations within indoor wireless network signals or Wi-Fi signals, and can sense a person's action status through fluctuation type and characteristics of the wireless network signals. This type of wireless sensing device can sense wireless signals by deploying one or more Channel State Information (CSI) transmitters and sensors.

However, during the deployment of existing wireless sensing devices, it is usually necessary to adopt a neural network to learn the correlation between a person's activities in the region-of-interest and wireless signals. Pre-trained models used by the neural network often cannot adapt to the complex environment of actual buildings. In order that the models can achieve the desired performance, it is often necessary to retrain or fine-tune the models according to the actual environment. This requires collecting a lot of on-site data and long-time training. In addition, operations of deploying, commissioning and adjusting the transmitters and sensors need to take a large amount of working hours.

Therefore, there is an ongoing need in the art for an improved deployment method and deployment system for a wireless sensing device, and it is desirable that new solutions can reduce deployment time and improve deployment accuracy.

"On Deep Learning-Based Massive MIMO Indoor User Localization" by Maximilian Arnold et al. (IEEE 19th International Workshop on Signal Processing Advances in Wireless Communication, 2018) discusses the usability of deep neural networks for multiple input multiple output user positioning, in particular for non-line of sight measurements. The model is trained using a two-step process - training on simulated line of sight data in the first step, and fine-tuning on measured non-line of sight data in the second step.

WO 2018/080124 discloses a deep learning neural network-based security system comprising at least one Wi-Fi node, and a deep learning module for detecting an object from a Wi-Fi signal received from the Wi-Fi node.

### SUMMARY OF THE INVENTION

According to a first aspect of the invention, a deployment method for a wireless sensing device according to claim 1 is provided. According to another aspect of the invention, a deployment system for a wireless sensing device according to claim 3 is provided. Dependent claims provide further embodiments of the invention.

The deployment method and deployment system for a wireless sensing device of embodiments of the present invention have the advantages of being simple in structure, convenience in usage, and high operating efficiency, etc. By applying the deployment method and deployment system for a wireless sensing device of embodiments of the present invention, rapid deployment and automatic configuration of the wireless sensing device can be achieved, thereby effectively improving deployment efficiency and reducing deployment cost.

### BRIEF DESCRIPTION OF THE DRAWINGS

Embodiments of the present invention will be described below in further detail with reference to the accompanying drawings and preferred embodiments, but those skilled in the art will appreciate that these drawings are drawn only for the purpose of explaining the preferred embodiments and should not be construed as limiting the scope of the present invention. In addition, unless specifically stated, the drawings are only intended to conceptually represent the composition or construction of the described objects and may contain exaggerated illustration, and the drawings are not necessarily drawn to scale.
FIG. 1 is a schematic structural view of a wireless sensing device.
FIG. 2 is a schematic structural view of an embodiment of a deployment system for a wireless sensing device when used in combination with the wireless sensing device shown in FIG. 1.
FIG. 3 is a flowchart of an embodiment of a deployment method for a wireless sensing device.

### DETAILED DESCRIPTION OF THE EMBODIMENT(S) OF THE INVENTION

Hereinafter, preferred embodiments of the present invention will be described in detail with reference to the accompanying drawings. Those skilled in the art will appreciate that these descriptions are merely illustrative and exemplary, and should not be construed as limiting the scope of protection of the present invention.

Firstly, it should be noted that the terms such as top, bottom, upward, and downward mentioned herein are defined with respect to the directions in various drawings, they are relative concepts, and therefore can be changed according to different positions and different states of use. Accordingly, these or other terms should not be interpreted as restrictive terms.

In addition, it should also be noted that for any single technical feature described or implied in the embodiments herein, or any single technical feature shown or implied in the drawings, it is still possible to combine these technical features (or their equivalents) so as to obtain other embodiments of the present invention that are not directly mentioned herein.

It should be noted that in different drawings, identical or substantially identical components are denoted by identical reference signs.

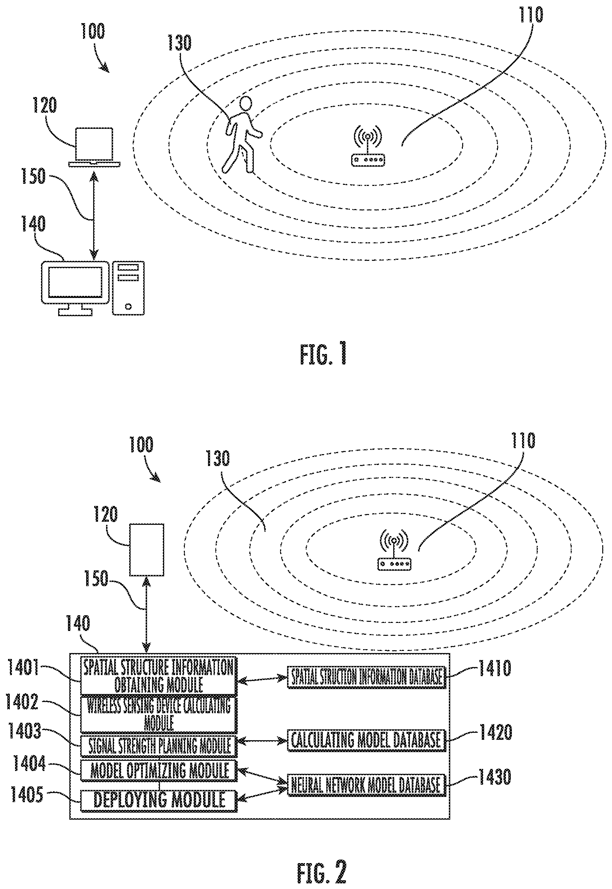

FIG. 1 is a schematic structural view of a wireless sensing device. FIG. 1 illustrates a typical wireless sensing device 100 including a transmitter 110 and a receiver 120. The transmitter 110 is configured to emit wireless signals and is therefore also referred to as a CSI transmitter. An example of the transmitter 110 is a commercially available Wi-Fi transmitting device, such as a commercial wireless router, a home wireless router, a portable router, or a wireless network card, etc. The wireless signals emitted by the transmitter 110 propagate within a building region or a region-of-interest, and will fluctuate differently with the spatial structure of signal propagation region and the activities of object and person 130 in the propagation region. In FIGS. 1 and 2, the dashed-line ellipses around the transmitter 110 represent wireless signals emitted by the transmitter 110.

The wireless signals are received by the receiver 120. The receiver 120 is typically any suitable CSI sensor, such as a sensing antenna, a dedicated sensing antenna, a dedicated data acquisition card, and the like. On one hand, the receiver 120 collects the wireless signals, and on the other hand, it collects and records fluctuations of the wireless signals caused by the activities of the object and person 130 in the propagation space of the wireless signals.

In the illustrated embodiment, the receiver 120 communicates with a server 140 through a network 150, and it is capable of transmitting the signals and fluctuations collected and recorded to the server 140 for processing. However, it is easy to understand that the receiver 120 itself may also have the ability to process wireless signals and fluctuations, and the server 140 and the network 150 may not be provided in some embodiments.

In addition, there is a known correlation between fluctuations in the signals caused by the activities of the object and person 130 in the propagation region and the appearance and actions of the person 130. That is to say, when the person 130 appears in the signal propagation region, the wireless signals received by the receiver 120 will have certain fluctuations, and when the person 130 makes different actions in the signal propagation region (for example, standing, sitting down, walking, etc.), the wireless signals received by the receiver 120 will have also different fluctuations. By analyzing these fluctuations, it is possible to judge whether there is a person in the signal propagation region and what action the person is making. Such information is critical for smart buildings. For example, it can be judged by the presence of person that an undesired entrant appears in the signal propagation region, or it can be judged that whether further operations have to be provided in the signal propagation region based on the presence of person in the signal propagation region and his/her actions, such as turning on a lighting device, playing specific sounds, etc.

For clarity, only a single transmitter 110 and a single receiver 120 are shown in FIG. 1. However, it is easy to understand that the wireless sensing device may include several transmitters 110 and several receivers 120, and these transmitters and receivers are deployed at different positions in the propagation region so that they can form different spatial structures and topology structures.

FIG. 2 is a schematic structural view of a deployment system for a wireless sensing device according to the present invention when used in combination with the wireless sensing device shown in FIG. 1. The receiver 120 is connected to the server 140 through the network 150. The deployment system for the wireless sensing device 100 includes: a spatial structure information obtaining module 1401, a wireless sensing device calculating module 1402, a signal strength planning module 1403, a model optimizing module 1404, and a deploying module 1405.

The spatial structure information obtaining module 1401 is configured to obtain spatial structure information of a region to be deployed. In the illustrated embodiment, the spatial structure information collecting module 1401 is in communication with a spatial structure information database 1410. The spatial structure information database 1410 may typically be a BIM model or building structure data software (for example, commercially available MagicPlan software). The spatial structure information of the region to be deployed may be any known data structure or a universal structure format file, and the spatial structure information of the region to be deployed typically includes information about the internal structure of the building. In addition, the deployment system for a wireless sensing device may also select a calculating model and a neural network data model for other modules according to the spatial structure information of the region to be deployed.

The term "region to be deployed" referred to herein indicates a region covered by the wireless signals transmitted from the transmitter 110, that is, a region where the receiver 120 is located. In addition, the "region-of-interest" mentioned below usually coincides with or is part of the region to be deployed.

The wireless sensing device calculating module 1402 is configured to calculate a layout of the wireless sensing device. Calculating the layout of the wireless sensing device includes: setting and/or calculating a position of the transmitter 110, a position of the region-of-interest (ROI), and a position of the receiver 120. The wireless sensing device calculating module 1402 may be configured to perform calculations automatically, or to carry out the layout of the transmitter 110, the receiver 120, and the region-of-interest according to the spatial structure information of the region to be deployed, or to select a layout scheme closest or most similar to the spatial structure information of the region to be deployed from known layout schemes, or may be configured to manually set one or more of the transmitter 110, the receiver 120, and/or the region-of-interest by a user. In the last case, the wireless sensing device calculating module 1402 may also be connected to an input device and a display output device, so that the user can input and the calculation result can be displayed to the user.

The signal strength planning module 1403 is configured to calculate a signal strength and judge whether the signal strength meets the requirements. The signal strength planning module 1403 is configured to calculate a wireless signal strength in the region-of-interest according to a calculating model and the positions of the transmitter 110 and the receiver 120. The signal strength planning module 1403 may communicate with a calculating model database 1420 to store data. The method for calculating the wireless signal strength is known, and the specific algorithm and details thereof will not be described in detail herein. The goal of the signal strength planning module 1403 is to ensure that the wireless signal strength in the region-of-interest exceeds a predetermined threshold so as to guarantee the accuracy of the detection result.

In an embodiment, if the calculation result of the signal strength planning module 1403 shows that the wireless signal strength in the region-of-interest fails to reach the predetermined threshold, the positions of the transmitter 110, the receiver 120, and/or the region-of-interest need to be reconsidered. In this case, it is possible to use the wireless sensing device calculating module 1402 again to configure or calculate the positions of one or more of the transmitter 110, the receiver 120, and/or the region-of-interest, or select another layout scheme, or the user may adjust the positions of one or more of the transmitter 110, the receiver 120 and/or the region-of-interest on the site, and enter new positions.

The model optimizing module 1404 is configured to optimize a pre-trained neural network model through transfer learning according to on-site data of the wireless sensing device. The on-site data includes wireless signals in the region-of-interest received by the receiver 120 and their fluctuations, and the neural network model includes a neural network model that detects a person's activities based on Wi-Fi signals. The pre-trained neural network model is typically a neural network model that has been trained according to a specific usage environment, and is stored in a neural network model database 1430. The model optimizing module 1404 communicates with the neural network model database 1430 to access data. Similarly, the model optimizing module 1404 also selects a corresponding neural network model according to the spatial structure information of the region to be deployed mentioned above, or selects a neural network model that is closest in structure and characteristics.

The neural network model is a neural network model based on a convolutional neural network (CNN). The model optimizing module 1404 uses an existing convolutional neural network model to initialize an on-site model of a specific region-of-interest, such as using parameters of a classifier of a convolutional layer, a pooling layer, and/or an output layer of the convolutional neural network model, (e.g., the number of network layers, the number of subcarriers, the convolution kernel, and the like). In addition, the model optimizing module 1404 extracts characteristics from the signals of on-site data of the wireless sensing device and uses the characteristics as input for on-site optimization, thereby training or optimizing a convolutional neural network model suitable for a specific region-of-interest. In addition, the optimization operation may also be performed on other artificial intelligence models known or to be developed in the art, and is not limited to the specific operation details described above.

Therefore, the model optimizing module 1404 implements rapid training of the convolutional neural network model through transfer learning. The principle of the above transfer learning is that CSI signal characteristics abstracted by the first several layers of the neural network model are largely independent of the problem learned.

In addition, the model optimizing module 1404 may also be further configured to test on-site data from the wireless sensing device with a default neural network model. If the default neural network model can meet the sensing requirements of the region-of-interest, there is no need to perform the training process of the new model described above, and the default neural network model is directly deployed.

The deploying module 1405 is configured to deploy the neural network model optimized for the specific region-of-interest into the wireless sensing device. For example, the optimized neural network model may be deployed on the server 140 or directly on the receiver 120. In addition, the deploying module 1405 may also store the optimized neural network model in the neural network model database 1430 so that the optimized neural network model can be used in subsequent deployment operations of other wireless sensing devices, which can reduce potential computing requirements of the subsequent deployment operations, thereby increasing deployment efficiency and reducing costs.

Although the spatial structure information database 1410, the calculating model database 1420 and the neural network model database 1430 are shown as parts of the server 140 in the illustrated embodiment, it is easy to understand that the spatial structure information database 1410, the calculating model database 1420 and the neural network model database 1430 may also be provided as remote servers, or any other suitable data sources.

Although the spatial structure information obtaining module 1401, the wireless sensing device calculating module 1402, the signal strength planning module 1403, the model optimizing module 1404 and the deploying module 1405 are deployed on the server 140 in the illustrated embodiment, the above modules may also be deployed on different devices according to actual requirements, such as performing calculations on the receiver of the wireless sensing device or on a handheld device. Therefore, the receiver of the wireless sensing device and/or the handheld device may be correspondingly provided with a processor, an input device, a display device, and the like. In an embodiment, the handheld device may be a smartphone or a tablet computer with specific applications installed, so that the user can perform on-site operations.

In the illustrated embodiment, the server 140 operates as a cloud server. Therefore, when the user deploys the wireless sensing devices in different regions, they can be connected to the server 140 through any suitable wireless network or wired network, and the server 140 performs parameter selection, model selection and model training in the cloud so that convenient and rapid deployment of the wireless sensing system is achieved and the need for on-site calculations and operations is reduced.

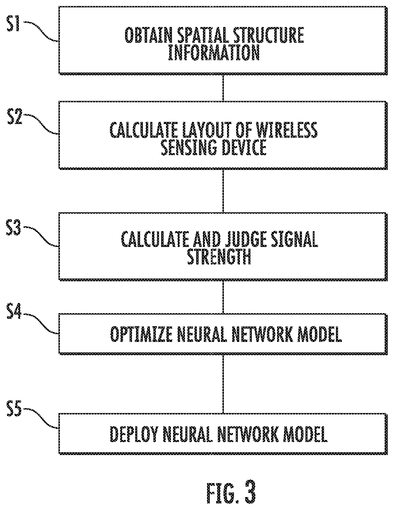

FIG. 3 is a flowchart of an embodiment of a deployment method for a wireless sensing device according to the present invention. The deployment method for a wireless sensing device according to an embodiment of the present invention includes the following steps:
S1: obtaining spatial structure information of a region to be deployed;
S2: calculating a layout of the wireless sensing device;
S3: calculating a signal strength, and judging whether the signal strength meets requirements;
S4: optimizing a pre-trained neural network model through transfer learning according to on-site data of the wireless sensing device; and
S5: deploying the optimized neural network model into the wireless sensing device.

Specifically, in step S1, the spatial structure information of the region to be deployed is obtained from a BIM model or building structure data software (for example, commercially available MagicPlan software). In addition, the spatial structure information of the region to be deployed may also be used in subsequent steps to select a computing model and a neural network data model.

In step S2, the layout of the wireless sensing device includes the positions of the transmitter, the receiver, and the region-of-interest. The positions of the above described various components and regions may be set manually by the user. In addition, it is also possible to select the most suitable or closest layout scheme from the existing layout schemes according to the spatial structure information of the region to be deployed. The selection of the specific scheme can be made by the server or manually by the user. If the selection is manually made by the user, data can be input through an input device, and the selected result is displayed on a display device.

In step S3, the wireless signal strength in the region-of-interest is calculated according to a calculating model and the positions of the transmitter and receiver determined in the above step. If the calculated wireless signal strength fails to reach a predetermined threshold, then the process returns to the previous step to re-calculate or re-arrange the positions of the transmitter, the receiver, and the region-of-interest. The re-arranging operation may be performed by the user on the site and the user may input, and the re-calculating operation may be performed by the server to select a new layout scheme.

In step S4, the server may communicate with a database storing a series of neural network models, wherein a universal neural network model and/or an optimized neural network model are stored in the database. The server may select the most suitable or closest nerve network model according to the spatial structure information of the region to be deployed determined in step S1 and the positions of the transmitter, the receiver, and region-of-interest determined in step S2.

The neural network model includes a neural network model for detecting a person's activities based on Wi-Fi signals.

Optionally, in step S4, the on-site data from the wireless sensing device may be firstly tested with the default neural network model. The default neural network model is usually a universal model, and in some cases, the default neural network model may be suitable for the sensing requirements of the region-of-interest. No further optimization is required in such cases. In some other cases, the default neural network model cannot meet the sensing requirements of specific regions-of-interest, and then the optimization operation described below will be performed.

The optimization operation of the neural network model is performed through transfer learning. Specifically, parameters in the selected neural network model are applied to initialize the model to be optimized. The neural network model is a convolutional neural network (CNN) model. The parameters of a classifier of a convolutional layer, a pooling layer, and/or an output layer of the convolutional neural network model, e.g., the number of network layers, the number of subcarriers, the convolution kernel, and the like, are applied to initialize the model to be optimized. The signal characteristics of the on-site data of the wireless sensing device are used as input in the optimization of the convolutional neural network model after extraction, thereby performing the optimization operation. In addition, the optimization operation may also be performed with other methods or approaches known or to be developed in the art, or performed on other artificial intelligence models known or to be developed in the art, and is not limited to specific operation details described above.

Step S5 optionally further includes storing the optimized neural network model in a database so as to use the neural network model for subsequent deployment operations on other wireless sensing devices, thereby effectively improving the reusability of the neural network model, and reducing the possibility of repeatedly training the neural network model.

Each of the above steps may be executed by one of the following platforms: a server, a receiver of a wireless sensing device, and a handheld device. In the illustrated embodiment, each step is executed on a server located in the cloud. However, it is easy to understand that one or more of the above steps may also be executed on other platforms, including but not limited to a receiver of a wireless sensing device and a handheld device of a user, etc. Therefore, the receiver of the wireless sensing device and/or the handheld device may be correspondingly provided with a processor, an input device, a display device, and the like.

In addition, the deployment method and deployment system for a wireless sensing device may further include a function of user login, and an optimized neural network model may be stored under a specific user's name, thereby ensuring privacy of the user. In this case, the server 140 may also provide services such as user registration, user login, and user logout, and includes a corresponding user database.

The deployment method and deployment system for a wireless sensing device may further include an operation of connecting the receiver 120 to the wireless network of the transmitter 110 and to a corresponding wireless network access module. Accordingly, the server, the receiver of the wireless sensing device and/or the handheld device can provide corresponding network access functions.

The deployment method and deployment system for a wireless sensing device can be used to quickly deploy a Wi-Fi-based person sensing system inside a building, thereby sensing the presence of a person in a region-of-interest inside the building, and potentially classifying the person's specific actions. This information can be used for decision making by other management and control systems of the building. For example, in the case of an unauthorized intruder in the region-of-interest, the security system may be warned of the intruder. For another example, in case of appearance or no appearance of person in the region-of-interest, devices such as an air conditioning system and a lighting system may be turned on or turned off accordingly, thereby improving the user experience of person inside the building.

In addition, by adopting the deployment method and deployment system for a wireless sensing device, the deployment efficiency of the wireless sensing system can be improved, and on-site commissioning and optimizing operations can be reduced.

Embodiments of the present invention have been disclosed herein with reference to the accompanying drawings, and those skilled in the art are also enabled to implement the present invention, including manufacturing and using any device or system, selecting suitable materials, and using any combined method. The scope of the present invention is defined by the claims.

## Claims

1. A deployment method for a wireless sensing device (100) including at least one transmitter (110) and at least one receiver (120) wherein the at least one transmitter (110) is configured to emit wireless signals and wherein the wireless signals are received by the at least one receiver (120) which records fluctuations of the wireless signals caused by the activities of an object and person (130) in a propagation space of the wireless signals, wherein the method comprises the following steps carried out by a deployment system for a wireless sensing device when used in combination with the wireless sensing device (100):
S1: obtaining spatial structure information of a region to be deployed by a spatial structure information obtaining module (1401) wherein the region to be deployed indicates a region covered by the wireless signals transmitted from the at least one transmitter (110), that is, a region where the at least one receiver (120) is located wherein a region-of-interest, ROI, coincides with or is part of the region to be deployed ;
S2: calculating a layout of the wireless sensing device (100) by a wireless sensing device calculating module (1402), wherein calculating the layout of the wireless sensing device (100) includes setting and/or calculating a position of the at least one transmitter (110), a position of the region-of-interest, ROI, and a position of the at least one receiver (120);
S3: calculating, by a signal strength planning module (1403), a signal strength according to a calculating model and the positions of the at least one transmitter (110) and the at least one receiver (120), and judging whether the signal strength meets requirements;
S4: optimizing, by a model optimizing module (1404), a pre-trained neural network model through transfer learning according to on-site data of the wireless sensing device (100), wherein the on-site data includes wireless signals in the ROI received by the at least one receiver (120) and their fluctuations, and the pre-trained neural network model includes a neural network model that detects a person's activities based on Wi-Fi signals,
wherein the neural network model is a neural network model based on a convolutional neural network, CNN, and the model optimizing module (1404) uses an existing CNN model to initialize an on-site model of the ROI, such as using parameters of a classifier of a convolutional layer, a pooling layer, and/or an output layer of the CNN model, wherein the model optimizing module (1404) extracts characteristics from the signals of on-site data of the wireless sensing device (100) and uses the characteristics as input for on-site optimization, thereby training or optimizing a CNN model suitable for the ROI; and
S5: deploying the neural network model optimized for the specific ROI into the wireless sensing device (100) by a deploying module (1405).

2. The deployment method according to claim 1, wherein in step S1, the spatial structure information of the region to be deployed is obtained from a BIM model or building structure data software.

3. A deployment system for a wireless sensing device (100) including at least one transmitter (110) and at least one receiver (120) wherein the at least one transmitter (110) is configured to emit wireless signals and wherein the wireless signals are received by the at least one receiver (120) which is configured to record fluctuations of the wireless signals caused by the activities of an object and person (130) in a propagation space of the wireless signals, the system comprising:
a spatial structure information obtaining module (1401) configured to obtain spatial structure information of a region to be deployed, wherein the region to be deployed indicates a region covered by the wireless signals transmitted from the at least one transmitter (110), that is, a region where the at least one receiver (120) is located wherein a region-of-interest, ROI, coincides with or is part of the region to be deployed ;
a wireless sensing device calculating module (1402) configured to calculate a layout of the wireless sensing device, wherein calculating the layout of the wireless sensing device (100) includes setting and/or calculating a position of the at least one transmitter (110), a position of the region-of-interest, ROI, and a position of the at least one receiver (120);
a signal strength planning module (1403) configured to calculate a signal strength according to a calculating model and the positions of the at least one transmitter (110) and the at least one receiver (120), and to judge whether the signal strength meets requirements;
a model optimizing module (1404) configured to optimize a pre-trained neural network model through transfer learning according to on-site data of the wireless sensing device (100) wherein the on-site data includes wireless signals in the ROI received by the at least one receiver (120) and their fluctuations, and the pre-trained neural network model includes a neural network model that detects a person's activities based on Wi-Fi signals; and
a deploying module (1405) configured to deploy the optimized neural network model optimized for the specific ROI into the wireless sensing device (100),
wherein the neural network model is a neural network model based on a convolutional neural network, CNN, and the model optimizing module (1404) is configured to use an existing CNN model to initialize an on-site model of the ROI, such as using parameters of a classifier of a convolutional layer, a pooling layer, and/or an output layer of the CNN model, wherein the model optimizing module (1404) is configured to extract characteristics from the signals of on-site data of the wireless sensing device (100) and is configured to use the characteristics as input for on-site optimization, thereby training or optimizing a CNN model suitable for the ROI.

4. The deployment system according to claim 3, wherein the spatial structure information obtaining module (1401) is configured to obtain the spatial structure information of the region to be deployed from a BIM model or building structure data software.

## Patentansprüche

1. Anwendungsverfahren für eine drahtlose Messvorrichtung (100), die mindestens einen Sender (110) und mindestens einen Empfänger (120) einschließt, wobei der mindestens eine Sender (110) so ausgebildet ist, dass er drahtlose Signale aussendet, und wobei die drahtlosen Signale von dem mindestens einen Empfänger (120) empfangen werden, der Schwankungen der drahtlosen Signale aufnimmt, die durch die Aktivitäten eines Objekts und einer Person (130) in einem Ausbreitungsraum der drahtlosen Signale veranlasst werden, wobei das Verfahren die folgenden Schritte umfasst, die von einem Anwendungssystem für eine drahtlose Messvorrichtung durchgeführt werden, wenn es in Kombination mit der drahtlosen Messvorrichtung (100) verwendet wird:
S1: Erhalten von räumlichen Strukturinformationen eines Bereichs, die von einem Modul (1401) zum Erhalten von räumlichen Strukturinformationen angewendet werden sollen, wobei der anzuwendende Bereich einen Bereich anzeigt, der von den von dem mindestens einen Sender (110) übertragenen drahtlosen Signalen abgedeckt wird, d. h. einen Bereich, in dem sich der mindestens eine Empfänger (120) befindet, wobei ein Bereich von Interesse, ROI, mit dem anzuwendenden Bereich übereinstimmt oder Teil dessen ist;
S2: Berechnen eines Layouts der drahtlosen Messvorrichtung (100) durch ein Berechnungsmodul (1402) für eine drahtlose Messvorrichtung, wobei das Berechnen des Layouts der drahtlosen Messvorrichtung (100) das Festlegen und/oder Berechnen einer Position des mindestens einen Senders (110), einer Position des Bereichs von Interesse, ROI, und einer Position des mindestens einen Empfängers (120) einschließt;
S3: Berechnen, durch ein Signalstärkenplanungsmodul (1403), einer Signalstärke gemäß einem Berechnungsmodell und den Positionen des mindestens einen Senders (110) und des mindestens einen Empfängers (120) und Beurteilen, ob die Signalstärke den Anforderungen entspricht;
S4: Optimieren, durch ein Modelloptimierungsmodul (1404), eines vorab trainierten neuronalen Netzwerkmodells durch Transferlernen gemäß den Vor-Ort-Daten der drahtlosen Messvorrichtung (100), wobei die Vor-Ort-Daten drahtlose Signale in dem ROI, die von dem mindestens einen Empfänger (120) empfangen werden, und deren Schwankungen einschließen, und das vorab trainierte neuronale Netzwerkmodell ein neuronales Netzwerkmodell einschließt, das die Aktivitäten einer Person auf der Grundlage von WLAN-Signalen erkennt,
wobei das neuronale Netzwerkmodell ein neuronales Netzwerkmodell auf der Grundlage eines gefalteten neuronalen Netzwerks, CNN, ist und das Modelloptimierungsmodul (1404) ein vorhandenes CNN-Modell verwendet, um ein Vor-Ort-Modell des ROI zu initialisieren, wie z. B. unter Verwendung von Parametern eines Klassifikators einer gefalteten Schicht, einer Pooling-Schicht und/oder einer Ausgabeschicht des CNN-Modells, wobei das Modelloptimierungsmodul (1404) Merkmale aus den Signalen der Vor-Ort-Daten der drahtlosen Messvorrichtung (100) extrahiert und die Merkmale als Eingabe für die Vor-Ort-Optimierung verwendet, wodurch ein für den ROI geeignetes CNN-Modell trainiert oder optimiert wird; und
S5: Anwenden des für den spezifischen ROI optimierten neuronalen Netzwerkmodells in der drahtlosen Messvorrichtung (100) durch ein Anwendungsmodul (1405).

2. Anwendungsverfahren nach Anspruch 1, wobei in Schritt S1 die räumlichen Strukturinformationen des anzuwendenden Bereichs aus einem BIM-Modell oder einer Gebäudestrukturdatensoftware erhalten werden.

3. Anwendungssystem für eine drahtlose Messvorrichtung (100), das mindestens einen Sender (110) und mindestens einen Empfänger (120) einschließt, wobei die mindestens einen Sender (110) so ausgebildet ist, dass sie drahtlose Signale aussendet, und wobei die drahtlosen Signale von dem mindestens einen Empfänger (120) empfangen werden, der so ausgebildet ist, dass er Schwankungen der drahtlosen Signale aufzeichnet, die durch die Aktivitäten eines Objekts und einer Person (130) in einem Ausbreitungsraum der drahtlosen Signale veranlasst werden, wobei das System Folgendes umfasst:
ein Modul (1401) zum Erhalten von räumlichen Strukturinformationen, das so ausgebildet ist, dass es räumliche Strukturinformationen über einen anzuwendenden Bereich erhält, wobei der anzuwendende Bereich einen Bereich anzeigt, der von den von dem mindestens einen Sender (110) übertragenen drahtlosen Signalen abgedeckt wird, d. h. einen Bereich, in dem sich der mindestens eine Empfänger (120) befindet, wobei ein Bereich von Interesse, ROI, mit dem anzuwendenden Bereich übereinstimmt oder Teil dessen ist;
ein Berechnungsmodul (1402) für eine drahtlose Messvorrichtung, das so ausgebildet ist, dass es ein Layout der drahtlosen Messvorrichtung berechnet, wobei das Berechnen des Layouts der drahtlosen Messvorrichtung (100) das Festlegen und/oder Berechnen einer Position des mindestens einen Senders (110), einer Position des Bereichs von Interesse, ROI, und einer Position des mindestens einen Empfängers (120) einschließt;
ein Signalstärkenplanungsmodul (1403), das so ausgebildet ist, dass es eine Signalstärke gemäß einem Berechnungsmodell und den Positionen des mindestens einen Senders (110) und der mindestens einen Empfänger (120) zu berechnet und beurteilt, ob die Signalstärke den Anforderungen entspricht;
ein Modelloptimierungsmodul (1404), das so ausgebildet ist, dass es ein vorab trainiertes neuronales Netzwerkmodell durch Transferlernen gemäß den Vor-Ort-Daten der drahtlosen Messvorrichtung (100) optimiert, wobei die Vor-Ort-Daten drahtlose Signale in dem ROI, die von dem mindestens einen Empfänger (120) empfangen werden, und deren Schwankungen einschließen, und das vorab trainierte neuronale Netzwerkmodell ein neuronales Netzwerkmodell einschließt, das die Aktivitäten einer Person auf der Grundlage von WLAN-Signalen erkennt; und
ein Anwendungsmodul (1405), das so ausgebildet ist, dass es das optimierte neuronale Netzwerkmodell, das für den spezifischen ROI optimiert ist, in der drahtlosen Messvorrichtung (100) anwendet,
wobei das neuronale Netzwerkmodell ein neuronales Netzwerkmodell auf der Grundlage eines gefalteten neuronalen Netzwerks, CNN, ist und das Modelloptimierungsmodul (1404) so ausgebildet ist, dass es ein vorhandenes CNN-Modell verwendet, um ein Vor-Ort-Modell des ROI zu initialisieren, wie z. B. unter Verwendung von Parametern eines Klassifikators einer gefalteten Schicht, einer Pooling-Schicht und/oder einer Ausgabeschicht des CNN-Modells, wobei das Modelloptimierungsmodul (1404) so ausgebildet ist, dass es Merkmale aus den Signalen der Vor-Ort-Daten der drahtlosen Messvorrichtung (100) extrahiert, und so ausgebildet ist, dass es die Merkmale als Eingabe für die Vor-Ort-Optimierung verwendet, wodurch ein für den ROI geeignetes CNN-Modell trainiert oder optimiert wird.

4. Anwendungssystem nach Anspruch 3, wobei das Modul (1401) zum Erhalten von räumlichen Strukturinformationen so ausgebildet ist, dass es die räumlichen Strukturinformationen des zu anzuwendenden Bereichs aus einem BIM-Modell oder einer Gebäudestrukturdatensoftware erhält.

## Revendications

1. Procédé de déploiement pour un dispositif (100) de détection sans fil incluant au moins un émetteur (110) et au moins un récepteur (120), dans lequel l'au moins un émetteur (110) est configuré pour émettre des signaux sans fil et dans lequel les signaux sans fil sont reçus par l'au moins un récepteur (120) qui enregistre des fluctuations des signaux sans fil causées par les activités d'un objet et d'une personne (130) dans un espace de propagation des signaux sans fil, dans lequel le procédé comprend les étapes suivantes mises en œuvre par un système de déploiement pour un dispositif de détection sans fil lorsqu'il est utilisé en combinaison avec le dispositif (100) de détection sans fil :
S1 : l'obtention d'informations de structure spatiale d'une région devant être déployée par un module (1401) d'obtention d'informations de structure spatiale, dans lequel la région devant être déployée indique une région couverte par les signaux sans fil transmis par l'au moins un émetteur (110), c'est-à-dire une région où l'au moins un récepteur (120) est situé, dans lequel une région d'intérêt, ROI, coïncide avec ou fait partie de la région devant être déployée ;
S2 : le calcul d'une disposition du dispositif (100) de détection sans fil par un module (1402) de calcul de dispositif de détection sans fil, dans lequel le calcul de la disposition du dispositif (100) de détection sans fil inclut le réglage et/ou le calcul d'une position de l'au moins un émetteur (110), d'une position de la région d'intérêt, ROI, et d'une position de l'au moins un récepteur (120) ;
S3 : le calcul, par un module (1403) de planification de puissance de signal, d'une puissance de signal selon un modèle de calcul et les positions de l'au moins un émetteur (110) et de l'au moins un récepteur (120), et le jugement si la puissance de signal répond à des exigences ;
S4 : l'optimisation, par un module (1404) d'optimisation de modèle, d'un modèle de réseau neuronal pré-entraîné par apprentissage par transfert selon des données sur site du dispositif (100) de détection sans fil, dans lequel les données sur site incluent des signaux sans fil dans la ROI reçus par l'au moins un récepteur (120) et leurs fluctuations, et le modèle de réseau neuronal pré-entraîné inclut un modèle de réseau neuronal qui détecte des activités d'une personne sur la base de signaux Wi-Fi,
dans lequel le modèle de réseau neuronal est un modèle de réseau neuronal basé sur un réseau neuronal convolutif, CNN, et le module (1404) d'optimisation de modèle utilise un modèle CNN existant pour initialiser un modèle sur site de la ROI, tel que l'utilisation de paramètres d'un classifieur d'une couche convolutive, d'une couche de regroupement et/ou d'une couche de sortie du modèle CNN, dans lequel le module (1404) d'optimisation de modèle extrait des caractéristiques des signaux de données sur site du dispositif de détection (100) sans fil et utilise les caractéristiques comme entrée pour l'optimisation sur site, en entraînant ou en optimisant ainsi un modèle CNN adapté à la ROI ; et
S5 : le déploiement du modèle de réseau neuronal optimisé pour la ROI spécifique dans le dispositif (100) de détection sans fil par un module (1405) de déploiement.

2. Procédé de déploiement selon la revendication 1, dans lequel à l'étape S1, les informations de structure spatiale de la région devant être déployée sont obtenues à partir d'un modèle BIM ou d'un logiciel de données de structure de bâtiment.

3. Système de déploiement pour un dispositif (100) de détection sans fil incluant au moins un émetteur (110) et au moins un récepteur (120), dans lequel l'au moins un émetteur (110) est configuré pour émettre des signaux sans fil et dans lequel les signaux sans fil sont reçus par l'au moins un récepteur (120) qui est configuré pour enregistrer des fluctuations des signaux sans fil causées par les activités d'un objet et d'une personne (130) dans un espace de propagation des signaux sans fil, le système comprenant :
un module (1401) d'obtention d'informations de structure spatiale configuré pour obtenir des informations de structure spatiale d'une région devant être déployée, dans lequel la région devant être déployée indique une région couverte par les signaux sans fil transmis par l'au moins un émetteur (110), c'est-à-dire une région où l'au moins un récepteur (120) est situé, dans lequel une région d'intérêt, ROI, coïncide avec ou fait partie de la région devant être déployée ;
un module (1402) de calcul de dispositif de détection sans fil configuré pour calculer une disposition du dispositif de détection sans fil, dans lequel le calcul de la disposition du dispositif (100) de détection sans fil inclut le réglage et/ou le calcul d'une position de l'au moins un émetteur (110), d'une position de la région d'intérêt, ROI, et d'une position de l'au moins un récepteur (120) ;
un module (1403) de planification de puissance de signal configuré pour calculer une puissance de signal selon un modèle de calcul et les positions de l'au moins un émetteur (110) et de l'au moins un récepteur (120), et pour juger si la puissance de signal répond à des exigences ;
un module (1404) d'optimisation de modèle configuré pour optimiser un modèle de réseau neuronal pré-entraîné par apprentissage par transfert selon des données sur site du dispositif (100) de détection sans fil, dans lequel les données sur site incluent des signaux sans fil dans la ROI reçus par l'au moins un récepteur (120) et leurs fluctuations, et le modèle de réseau neuronal pré-entraîné inclut un modèle de réseau neuronal qui détecte des activités d'une personne sur la base de signaux Wi-Fi ; et
un module (1405) de déploiement configuré pour déployer le modèle de réseau neuronal optimisé, optimisé pour la ROI spécifique, dans le dispositif (100) de détection sans fil,
dans lequel le modèle de réseau neuronal est un modèle de réseau neuronal basé sur un réseau neuronal convolutif, CNN, et le module (1404) d'optimisation de modèle est configuré pour utiliser un modèle CNN existant pour initialiser un modèle sur site de la ROI, tel que l'utilisation de paramètres d'un classifieur d'une couche convolutive, d'une couche de regroupement et/ou d'une couche de sortie du modèle CNN, dans lequel le module (1404) d'optimisation de modèle est configuré pour extraire des caractéristiques des signaux de données sur site du dispositif (100) de détection sans fil et est configuré pour utiliser les caractéristiques comme entrée pour l'optimisation sur site, en entraînant ou en optimisant ainsi un modèle CNN adapté à la ROI.

4. Système de déploiement selon la revendication 3, dans lequel le module (1401) d'obtention d'informations de structure spatiale est configuré pour obtenir les informations de structure spatiale de la région devant être déployée à partir d'un modèle BIM ou d'un logiciel de données de structure de bâtiment.
